Europäisches Patentamt

European Patent Office

Office européen des brevets

(11) Publication number: **0 154 118**
A2

# (12) EUROPEAN PATENT APPLICATION

(21) Application number: 85100314.5

(22) Date of filing: 14.01.85

(51) Int. Cl.⁴: **B 62 K 3/04**

(30) Priority: 16.01.84 IT · 1917984

(43) Date of publication of application:
11.09.85 Bulletin 85/37

(84) Designated Contracting States:
AT BE CH DE FR GB LI NL SE

(71) Applicant: TOUR MECCANICA S.r.l.
Via F.lli Bronzetti, 31
I-20129 Milan(IT)

(72) Inventor: Tarocco, Pietro
Via Petrarca 30
I-21042 Caronno Pertusella Varese(IT)

(72) Inventor: Turconi, Alberto
Via Damiano Chiesa, 88
I-21042 Caronno Pertusella Varese(IT)

(74) Representative: Dr. Ing. A. Racheli & C.
Viale San Michele del Carso, 4
I-20144 Milano(IT)

(54) Cycle, in particular racing cycle.

(57) A racing cycle (10) which comprises a front wheel (14) of smaller diameter than that of the rear wheel (16), a pedal-propulsion unit (18) substantially coaxial with the rear wheel hub (36) and handlebars (22) positioned lower than the saddle. The frame comprises a tube or bar (28) slanting down towards the front, a pair of lower tubes (24) slanting down towards the rear and a rear fork (26), such as to form a triangle when seen in profile. A saddle (20) with yielding bends, which adapt to the cyclist's different positions, is also provided.

FIG.1

Applicant

TOUR MECCANICA S.R.L.

Via F.lli Bronzetti, 31

IT - 20129 MILANO


"CYCLE, IN PARTICULAR RACING CYCLE"


This present invention refers to the field of cycles or bicycles, in particular racing or record-setting cycles. Racing cycles known at present comprise a frame, basically similar to that of ordinary cycles, that is to say, comprising a top tube or bar, a front slanting tube or down tube, a saddle post tube or seat tube, a front fork, a rear fork and horizontal rear tubes. In addition, they comprise two wheels, usually of equal diameter, and a pedal-propulsion unit is fitted to the frame in an intermediary position between the wheels, the handlebars are the drop type and the saddle is rigid. Some racing cycles have been tested with a front wheel of smaller diameter than that of the rear wheel.

Speed records achieved on cycles are near the limit of human possibility and in order to better them, the following objectives must be pursued: improve the aerodynamics of the man-machine unit and reduce the cycle's weight; allow the rider to fully exploit the energy expended for motion; and allow the best possible supply of air to the rider lungs as required for energy expenditure.

With known racing cycles the rider, to realise the best aerodynamics of the man-machine unit, places himself in a so-called egg or wedge-like position. For this purpose he raises the rear seat to its maximum and bends over the handlebars. It is very difficult to maintain this position, especially in long races (attempts at the average hourly speed record), in as much as the cycle is not designed for this posture. In particular, breathing is difficult due to the pressure on the chest and the movement of the legs, which tend to strike against the chest, unsettling the rider from the position of maximum aerodynamic penetration and thereby cancelling the positive effects of said position. In order to make this position easy to adopt, racing cycles have been constructed with the front wheel's diameter less than that of the back wheel. This solution has not been successful, because with the propulsion unit being located between the wheels lowering the front wheel also lowered the pedals, which struck the ground, especially on bends, while the knees prevented normal supply of air to the lungs by pressing against the chest. Therefore, a cycle is needed in this field which allows the rider to adopt an "extended" rather than bent aerodynamic position, enabling him to push on the pedals in such a way as to extend the arch for maximum leverage and, in addition, to freely expand his chest.

The weight of the cycle is usually reduced by making the frame with special highly resistant metal, so that the weight of the frame itself is reduced. In traditional racing cycles the lower part of the frame has the special function of holding the propulsion unit (cranks, front sprocket wheels, etc.). It therefore takes all the stress caused by the rider, as well as a large share of his weight. The frame cannot be lightened too much due to the necessity of having a structure made of elements welded together, which with present architectural designs must take account of the stress from the above-mentioned weights. Therefore, a cycle is needed in this field which is both sufficiently solid and light.

A further drawback with known cycles, however well designed, is that, as the frames of these cycles are a compromise between maximum lightness and mechanical solidity, there always remains a certain elasticity which absorbs a part of the rider's energy to the detriment of speed. There is, therefore, the need to reduce this inherent elasticity in the cycle frame.

Another drawback with traditional cycles is the shape of the saddle. Traditional racing cycles have the saddle fitted in a fixed position, which allows a predetermined part of the rider's anatomy to be supported. Clearly, if the rider adjusts the saddle for normal riding, when he adopts the wedge-like position the saddle will press against a different part of his body, and viceversa, leading to evident discomfort. The best position is obtained by drawing the pelvis back and up, so that a normal saddle presses against sensitive parts of the rider's anatomy. The need for greater saddle comfort is thus required in this field.

The object of this present invention is to get round the above-listed drawbacks in traditional cycles and, especially, to realise a cycle frame, in particular for racing cycles, which is light, allows adoption of an aerodynamic position that is nevertheless comfortable, and which does not waste the rider's energy.

The set objects have been realised in a cycle comprising the characteristics according to claim 1.

Further characteristics are contained in this application's subsequent claims.

This new cycle allows the user to adopt a position in which he is practically extended forward and can press on the pedals, without the movement of his legs hampering breathing.

In addition, this new cycle has a new architectural structure in which the number of components is reduced, allowing with the same materials a reduction in frame weight up to 30%.

Furthermore, this new cycle has the advantage of being especially rigid, so that none of the energy expended by the rider is wasted.

Another advantage of this cycle, subject of the present patent, is that the new saddle avoids the drawbacks of normal saddles and adapts to the rider's anatomy as he moves. The particular shape of the handlebars provides a natural support for the palm of the hand and for the upper limbs.

An embodiment of this invention is described below, by way of a non-binding example, with reference to the accompanying drawings, in which:

Fig. 1 is a rear perspective view of the cycle;

Fig. 2 is a side view of the cycle in fig. 1;

Fig. 3 is an enlarged top view of the transmission unit;

Fig. 4 is a top view of a saddle for the cycle;

Fig. 5 is a left side view of the saddle;

Fig. 6 is a bottom view of the saddle.

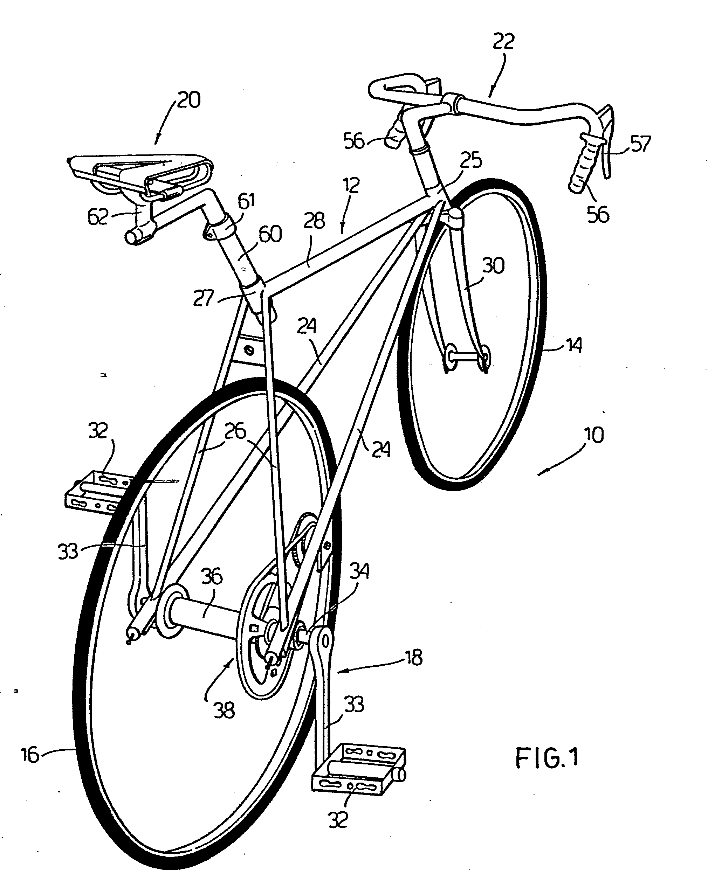

As can be seen in fig. 1, a new cycle, in particular a racing or record-setting cycle, indicated globally by 10, comprises a frame 12, a front wheel 14, a rear wheel 16, a pedal-propulsion unit 18, a saddle 20 and handlebars 22. The diameter of the front wheel 14 is less than that of the back wheel 16.

The frame 12 basically comprises a pair of slanting lower tubes or elements 24 (here and afterwards the word "tube" stands for an elongated rod-shaped element, generally but not necessarily tubular) extending from the front post 25 to a position near the spin axis of the rear wheel hub. In addition, it comprises a rear fork composed of two elements or tubes 26, 26, welded at the lower end to each tube 24 and extending upward to the saddle pillar coupling 27; and lastly an upper tube or bar or element 28 extending from the saddle pillar coupling 27 to the post 25 in a downward slant from the coupling 27 to the post 25. It can be seen, when viewed sideways on, that in this way the frame is shaped like an irregular triangle with at its vertices, briefly, the front post, saddle pillar coupling and rear wheel axle or hub. The saddle pillar coupling is at the top and the front post at an intermediary height between said coupling and the wheel hub. The frame is completed by a front fork 30, of a basically traditional type, for the front wheel 14.

It is preferable for the top tube 28 to slant at about 15° from the horizontal, generally 10 ÷ 20°. The longitudinal element formed by the two tubes 24 slants from the horizontal by 10 ÷ 20°, preferably about 14°. The angle between elements 24 and 28 is generally 20 ÷ 40°, preferably about 29°.

The propulsion unit 18 comprises a pair of pedals 32 with cranks 33 fitted to a shaft 34 which is housed so that it rotates in a sleeve attached to the frame 12. The shaft 34 is also rotatably housed in the hub 36 of the rear wheel 16, with the result that shaft 34 and hub 36 are substantially coaxial. Between the shaft 34 for the pedals and the wheel hub is inserted a chain transmission 38, like for example the one shown in the figures, comprising a first sprocket (driving sprocket) 40 fitted on the shaft, a first chain 42, a second sprocket 44 held on a pin 46, in its turn held by a plate 48 attached to tube 24. On pin 46 is also fitted a third sprocket 50 which transmits motion, by means of chain 52, to a fourth sprocket 54, attached to rear hub 36.

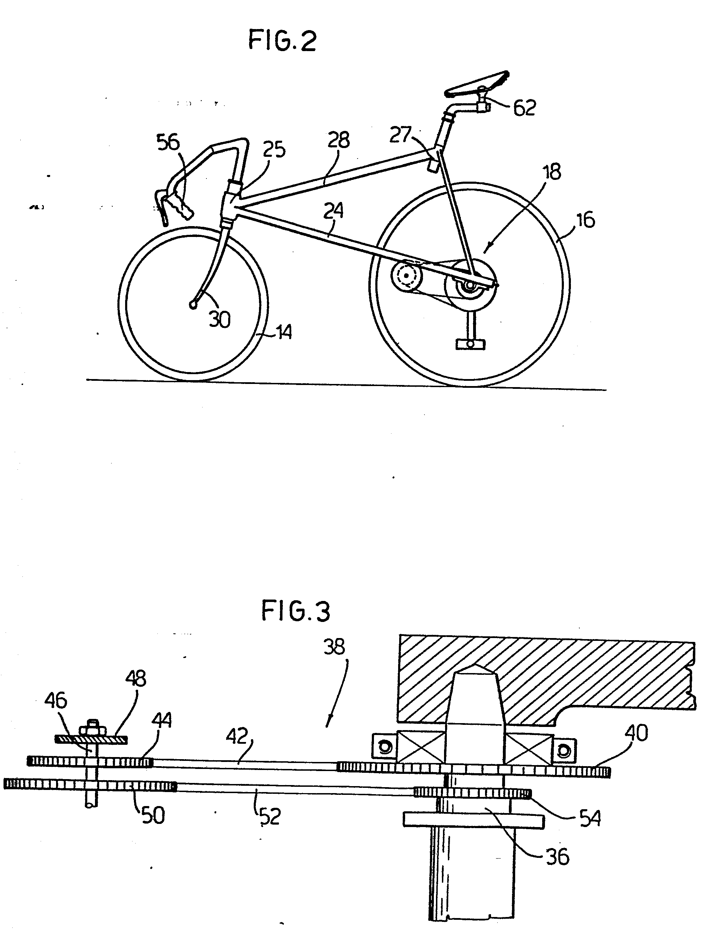

Seen sideways on, the handlebars 22 have a downward slanting shape and comprise two handgrips 56 in a lowered position (fig. 2). It is preferable for them to be set at an angle to the horizontal plane. The hand brakes are indicated by the number 57.

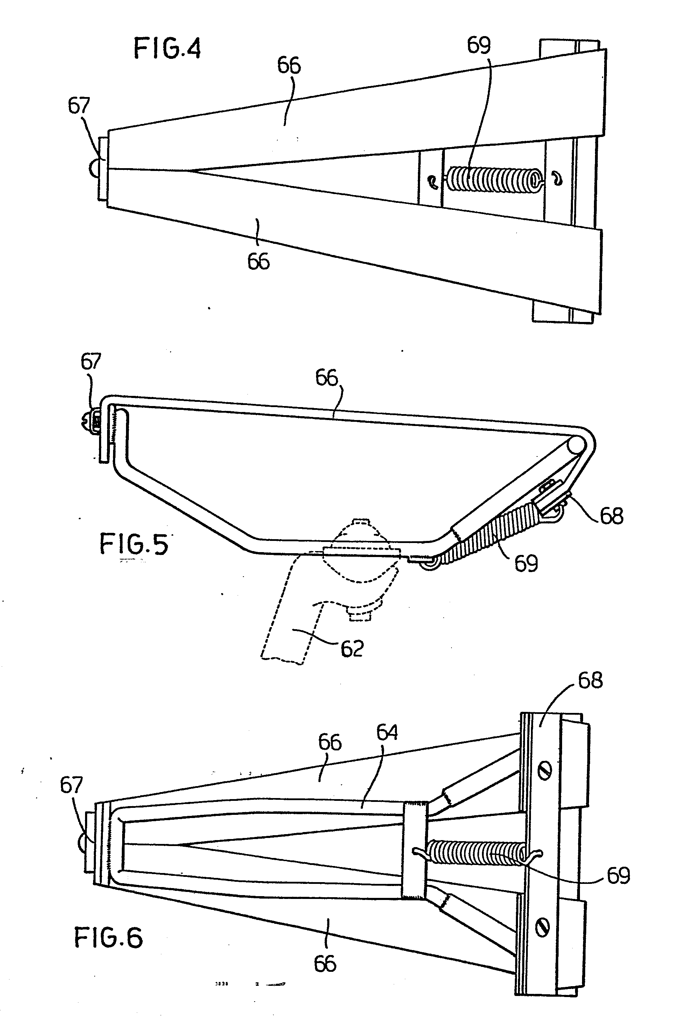

The saddle unit 20 basically comprises a saddle pillar 60 set at an angle, held by the frame coupling 27 and with the height adjustable at 61. In addition, it comprises a bracket 62 held by the pillar, said bracket (indicated by broken lines in fig. 5) supporting a frame generally made of metal, 64. Two straps or bands 66, 66, made for example of leather or plastics, are fixed to the front end 67 of frame 64 with, for example, a screw. The other ends of bands 66 are fixed to an oscillating plate 68, made up of two parts bolted together to hold said ends of the bands. Plate 68 is held onto the frame 64 by spring 69 in such a way that it can oscillate, allowing one band to lengthen or shorten relative to the other.

On this new cycle the cyclist can adopt an aerodynamic position with his back lowered for less air resistance, though remaining comfortable and exerting the greatest possible effort. The smaller diameter of the front wheel relative to the rear one and the shape of the handlebars allow this lowered position to be adopted.

Location of the pedals towards the rear allows the rider to pedal free from pressure on the chest. The frame's special configuration gives it greater solidity compared to traditional cycles with, however, reduction in weight using the same materials, whereas the saddle configuration provides the user with greater comfort.

Evidently such variations of and changes to what has been described above may be made, which are within the capability of experts in this field, without thereby the scope of protection for this invention being prejudiced.

TOUR MECCANICA S.R.L.

IT - 20129 MILAN

C L A I M S

1. A cycle, in particular a racing or track cycle, comprising a frame (12), an idle front wheel (14) with hub, a rear driving wheel (16) with hub, a pedal-propulsion unit (18), rotatably housed in the frame, a saddle unit (20) and handlebars (22), characterized in that the propulsion unit (18) is fitted in a position substantially coaxial with the rear wheel hub (36); the diameter of the front wheel (14) is less than that of the rear wheel (16); and the handlebars (22) are placed lower than the saddle (20).

2. A cycle according to claim 1, characterized in that said frame (12) includes a lower longitudinal element (24) extending from a handlebar support post (25) or front fork basically as far as the rear hub (36) axis, a rear fork (26) extending basically from the lower longitudinal element to a saddle post and an upper longitudinal element (28) extending from the saddle post (60) to the handlebar post (25), said upper longitudinal element slanting down towards the front.

3.      A cycle according to claim 2, characterized in that said lower longitudinal element (24) comprises a pair of rods or tubes.

4.      A cycle according to claim 1, characterized in that said handlebars (24) have a forward and downward slanting shape when viewed sideways on and handgrips (56) slanting down and backwards.

5.      A cycle according to claim 1, said propulsion unit (18) comprising two pedals (32) attached to a shaft (34), said shaft being attached to a transmission driving element (40), said rear wheel hub being attached to a driven element (54) of the transmission, characterized in that said shaft (34) is rotatably housed in the rear wheel hub (36).

6.      A cycle according to claim 1, characterized in that said saddle unit (20) comprises a saddle composed of a frame (64), a pair of bands (66) with one end fixed to the frame and an oscillating plate (68) to which are fixed the other end of the bands, said oscillating plate being attached to the frame by a spring (69).

7.      A cycle according to claim 2, characterized in that said upper longitudinal element (28) slants at an angle of 10-20° from the horizontal.

8.     A cycle according to claim 3, characterized in that said lower longitudinal element (24) slants at an angle of 10-20° from the horizontal.

0154118

FIG.1

## FIG.2

## FIG.3

FIG.4

67

66

69

66

FIG.5

67

66

69

68

62

FIG.6

67

66    64

66

68

69